# EUROPEAN PATENT SPECIFICATION

(11) **EP 4 285 013 B1**
(45) Date of publication and mention of the grant of the patent: **26.03.2025**
(21) Application number: 21702258.1
(22) Date of filing: 27.01.2021
(51) Int. Cl.: F02D 19/06, F02M 21/02, F02M 21/06

(54) **AN ASSEMBLY FOR DIRECT INJECTION OF GASEOUS FUEL IN A CYLINDER OF A TWO-STROKE INTERNAL COMBUSTION PISTON ENGINE AND A TWO-STROKE INTERNAL COM-BUSTION PISTON ENGINE**
EINBAUGRUPPE ZUR DIREKTEINSPRITZUNG VON GASFÖRMIGEM KRAFTSTOFF IN EINEN ZYLINDER EINES ZWEITAKT-VERBRENNUNGSKOLBENMOTORS UND EINES ZWEITAKT-VERBRENNUNGSKOLBENMOTORS
ENSEMBLE D'INJECTION DIRECTE DE CARBURANT GAZEUX DANS UN CYLINDRE D'UN MOTEUR A COMBUSTION INTERNE A DEUX TEMPS ET D'UN MOTEUR A COMBUSTION INTERNE A DEUX TEMPS

(43) Date of publication of application: 06.12.2023
(73) Proprietor: WÄRTSILÄ SERVICES SWITZERLAND LTD, 8500 Frauenfeld (CH)
(72) Inventor: KISHORE NANDA, Sangram, 8500 Frauenfeld (CH); CALVO OLIVEIRA, Alejandro, 8500 Frauenfeld (CH)
(74) Representative: Genip Oy
(86) International application number: PCT/EP2021/051844
(87) International publication number: WO 2022/161601

(56) References cited:
- WO-A1-2018/202313
- DE-A1- 102019 205 605
- JP-A- 2005 308 149
- US-A- 6 095 101
- US-A1- 2002 085 921
- CLASSNK / NIPPON ET AL: "LNG Fuelled Ships - Activities of ClassNK -", LNG-FUELLED VESSEL TECHNOLOGIES SEMINAR ACTIVITIES OF CLASSNK, 25 July 2014 (2014-07-25), XP055206873, Retrieved from the Internet <URL:http://classnk-rd.com/LNG-Fuelled_Vessel_Technologies_Seminar/pdf/6_Activities_of_ClassNK-LNG_Fuelled_Ship-.pdf> [retrieved on 20150807]

## Description

### Technical field

The present invention relates to an assembly for direct injection of gaseous fuel in a cylinder of a two-stroke internal combustion piston engine according to the preamble of claim 1. Invention relates also to a two-stroke internal combustion piston engine provided with a direct injection gaseous fuel feeding system.

### Background art

Internal combustion piston engine is widely utilized in providing mechanical power in land-based power plant and in marine vessel for producing electric power and/or propulsion power.

A dual-fuel engine uses a low-pressure gaseous fuel such as natural gas that is mixed at relatively low pressure with intake air admitted into the engine cylinders. The air/gaseous fuel mixture that is provided to the cylinder under certain operating conditions is compressed and then ignited using a spark ignition or using a compression ignition pilot fuel, such as light fuel oil, which is injected into the air/gaseous fuel mixture present in the cylinder.

A direct injection gas engine is also known as such, in which a gaseous fuel, such as liquefied natural gas (LNG), is injected into the cylinder at high-pressure while combustion in the cylinder from a diesel pilot is already underway. The direct injection gas engines operate on the gaseous fuel, and the diesel pilot provides ignition of the gaseous fuel.

DK179056B1 discloses a fuel supply system for supplying high-pressure gas to a large two-stroke compression-ignited internal combustion engine. The engine is provided with a fuel injection system for injecting the supplied high-pressure gas into the combustion chambers of the engine. The fuel supply system comprises a feed conduit connecting an outlet of a liquefied gas storage tank to the inlet of a high-pressure pump for transporting liquefied gas from the liquefied gas storage tank to the high-pressure pump, a transfer conduit connecting the outlet of the high-pressure pump to the inlet of a high-pressure vaporizer for transporting high-pressure liquefied gas from the high-pressure pump to the high-pressure vaporizer, a supply conduit connecting the outlet of the high-pressure vaporizer to an inlet of the fuel injection system of the engine for transporting high-pressure vaporized gas to the fuel injection system of the engine. The high-pressure pump comprises two or more pump units. Each pump unit comprises a pump piston slidably disposed in a pump cylinder and a hydraulically powered drive piston slidably disposed in a drive cylinder with the drive piston coupled to the pump piston for driving the pump piston.

US918808069 B2 discloses an engine fuel system having liquid and gaseous fuel systems, each of which injects fuel directly into an engine cylinder. The gaseous fuel system is a direct injection gas system which comprises a liquefied gas storage, liquefied gas pump, liquefied gas evaporator and gaseous gas fuel rail connected to a fuel injector.

A gaseous fuel direct injection fuel supply system needs to be configured such that gas at substantially high-pressure is delivered to the gas injectors arranged to the cylinders of the engine.

Both of the above mentioned prior art documents suggest to control the operation of the gaseous fuel pump by control fluid which operates the high-pressure piston pump. Variable control of the high-pressure pump requires a variable high-pressure pump of the control fluid system. The prior art solutions have a general problem of complexity in structure of liquefied gas pump and its controllability.

Other systems are known for example from WO 2018/202313 A1 and US 6 095 101 A.

An object of the invention is to provide an assembly for direct injection of gaseous fuel in a cylinder of a two-stroke internal combustion piston engine which is considerably improved compared to the prior art solutions.

An object of the invention is to provide two-stoke internal combustion piston engine having a direct injection gaseous fuel feeding system which is considerably improved compared to the prior art solutions for gas operated large two-stroke internal combustion piston engines.

### Disclosure of the Invention

Objects of the invention can be met substantially as is disclosed in the independent claim and in the other claims describing more details of different embodiments of the invention.

The assembly is therefore configured to pump the liquefied gas in liquid phase, cryogenic conditions, and evaporate the pumped gas into gaseous form, which may be administered to the cylinder by the gaseous gas fuel injector. The fuel injection system utilizing liquefied gas is provided for a large two-stroke engine which can be easily modularized. Safety issues relating to gaseous fuel are taken care of by the enclosure which is common for the liquefied gas supply manifold and the liquefied gas return manifold, a liquefied gas high-pressure pump unit. The assembly can be readily installed to an existing large two-stroke engine, because it is configured to be assembled on top of the engine.

According to an embodiment of the invention the enclosure is provided with an air inlet and an outlet connectable to a blower arranged to the assembly. This makes it possible to connect the outlet to a blower for conveying possibly leaked fuel safely away from the engine.

According to an embodiment of the invention the liquefied gas supply manifold in the enclosure is a single wall manifold and the liquefied gas return manifold in the enclosure is a single wall manifold.

According to the invention the fuel feed line outside the enclosure is provided with a separate double wall which forms an intermediate space inside the double wall and that the enclosure is provided with a lead-through block via which the fuel feed line is led from the enclosure to the heat exchanger unit, which lead-through block separates the intermediate space of the fuel feed line from the space of the enclosure.

According to an embodiment of the invention the assembly comprises a gaseous gas accumulator connected to the gaseous gas outlet of the heat exchanger unit by means of the fuel feed line.

According to the invention the assembly comprises an enclosure and the assembly is configured for a multi-cylinder two-stroke internal combustion piston engine comprising a several cylinders arranged in a line of cylinders, wherein
- the enclosure has a length of the line of cylinders,
- and the enclosure is provided with an air inlet and an outlet at opposite ends of the enclosure.

According to an embodiment of the invention the assembly is configured for a multi-cylinder two-stroke internal combustion piston engine comprising a several cylinders arranged in a line of cylinders, and
- the liquefied gas supply manifold, the liquefied gas return manifold and the liquefied gas high-pressure pump unit are arranged within the enclosure, and
- the heat exchanger unit, and the gaseous gas accumulator are arranged outside the enclosure.

According to an embodiment of the invention the liquefied gas supply manifold is an assembly of multiple gas supply manifold sections, comprising one supply manifold section for each cylinder of the engine.

According to an embodiment of the invention the liquefied gas return manifold is an assembly of multiple gas return manifold sections, comprising one return manifold section for each cylinder of the engine.

According to an embodiment of the invention the assembly comprises several fuel delivery lines for the cylinders of the engine, each fuel delivery line comprising
one liquefied gas high-pressure pump unit connected to the liquefied gas supply manifold and to the liquefied gas return manifold,
one heat exchanger unit configured to evaporate the liquefied gas and heating the gaseous gas, and
one gaseous gas accumulator.

A two-stroke internal combustion piston engine according to the invention comprises more than one cylinders in which each cylinder is provided with an assembly according to anyone of the claims 6 and 7.

According to an embodiment of the invention the enclosure has a length extending from a first cylinder in the line of cylinders to the last cylinder in the line of cylinders of the engine.

According to an embodiment of the invention the enclosure, the liquefied gas supply manifold, the liquefied gas return manifold and the liquefied high-pressure pump units are arranged on and attached to the top of engine.

According to an embodiment of the invention that the engine comprises one fuel delivery line for each cylinders (100) of the engine.

The assembly according to the invention and its various embodiments are applicable for use liquefied combustible gas for direct injection of gaseous fuel into a cylinder of an internal combustion piston engine, and combustion therein. For example, liquefied ammonia, liquefied natural gas or liquefied petroleum gas as suitable fuel materials.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a simplified assembly for direct injection of gaseous fuel into a cylinder of a two-stroke internal combustion piston engine according to an embodiment of the invention,
Figure 2 illustrates a simplified assembly for direct injection of gaseous fuel into a cylinder of a two-stroke internal combustion piston engine according to another embodiment of the invention, and
Figure 3 illustrates a two-stroke internal combustion piston engine provided with an assembly for direct injection of gaseous fuel according to still another embodiment of the invention.

### Detailed Description of Drawings

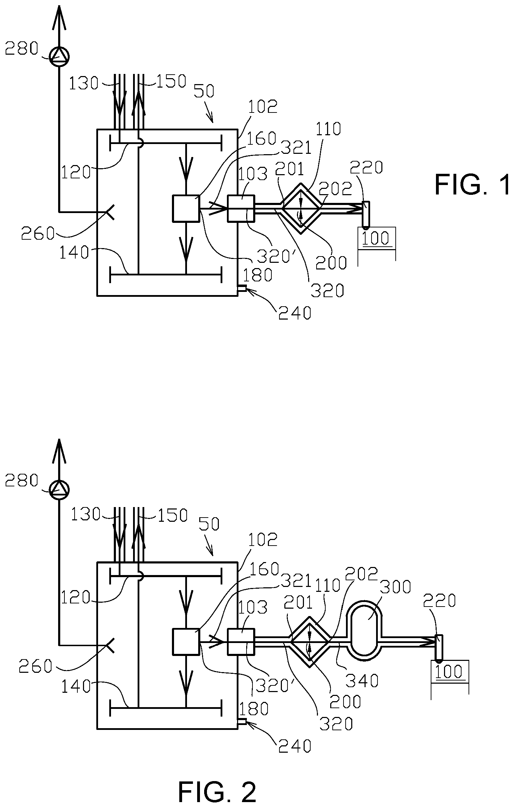

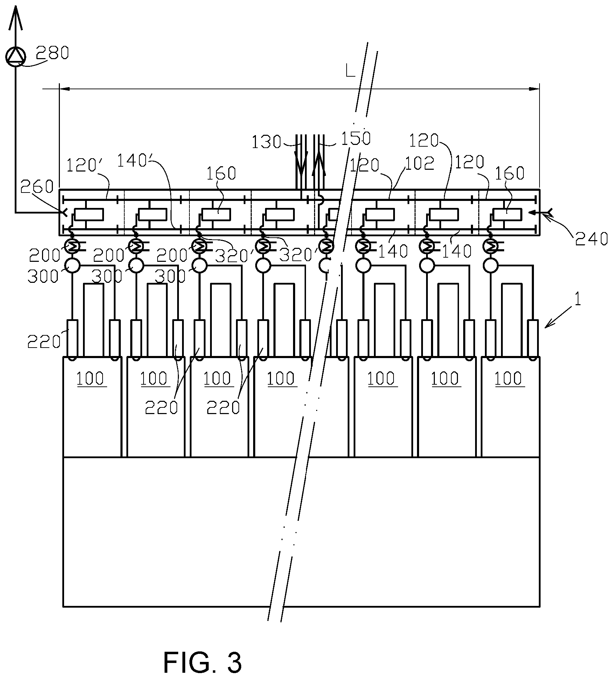

Figure 1 depicts schematically a simplified assembly 50 for direct injection of gaseous fuel into a cylinder 100 of a two-stroke internal combustion piston engine 1. The assembly is configured to attend to injecting gaseous fuel directly to one combustion chamber of the engine, while the fuel is pressurized to injection pressure in liquid phase. The assembly 50 comprises a liquefied gas supply manifold section 120 and a liquefied gas return manifold section 140 which are arranged parallel with each other. In practise the manifold sections are formed using advantageously pipes and flanges. In this case the word section refers to the fact that the assembly in the figure 1 is for one cylinder and usually the engine has more than one cylinders. In that case the manifold is formed of respective number of manifold sections coupled with each other by means of the flanges. The assembly in the figure 1 depicts the minimum components of a fuel delivery line for one cylinder of the engine. And, when the engine comprises several cylinders in a line, arranged one after the other, the engine is provided with corresponding number of assemblies 50, connected to each other such that the liquefied gas supply manifold 120' and a liquefied gas return manifold 140' extend from the first cylinder in the line of cylinders to the last cylinder in the line of cylinders (see the figure 3). The liquefied gas supply manifold 120' is connected to a liquefied gas supply pipe 130 and the liquefied gas return manifold 140' is connected to a liquefied gas return pipe 150.

The assembly comprises further a liquefied gas high-pressure pump unit 160, which is connected to the liquefied gas supply manifold section 120 and to the liquefied gas return manifold section 140. The liquefied gas tends to heat in the pump due to the pumping and heat transfer from the surroundings. The pump is provided with heat insulation to minimize undesired warming of the liquefied gas in the pump at the pumping stage. The pump is provided, in addition to the connection to the liquefied gas supply manifold section 120, a connection to the liquefied gas return manifold section 140. That is because in order to prevent - or at least minimize - even partial phase change of the liquefied gas in to gaseous form in the pump, it is advantageous to maintain low temperature of liquefied gas in the pump and therefore a portion of the liquefied gas is led through the pump and returned to the liquefied gas return manifold for cooling the pump unit 160. The liquefied gas at cryogenic conditions is partly circulated through the liquefied gas high-pressure pump unit 160 such that part of the liquefied gas which flows from the liquefied gas supply manifold 120 to the liquefied gas high-pressure pump unit 160 is guided to the liquefied gas return manifold 140 to be returned to a source of liquefied gas. A major part of the liquefied gas, which flows from the liquefied gas supply manifold 120 to the liquefied gas high-pressure pump unit 160, is guided at an elevated pressure, which results in desired fuel injection pressure, to a high-pressure liquefied gas outlet 180 in the liquefied gas high-pressure pump unit 160. The liquefied gas high-pressure pump unit 160 comprises preferably a hydraulically operated piston pump. The pump is driven by high pressure hydraulic fluid such that is comprises a drive part to which the hydraulic fluid is guided to reciprocate the drive part and the piston of the pump.

The liquefied gas at elevated pressure is guided via the high-pressure liquefied gas outlet 180 to a heat exchanger unit 200 which is configured to evaporate the liquefied gas into gaseous form and to heat the gaseous gas to suitable level for injection into the engine. For that purpose, the heat exchanger unit 200 is in flow connection with the high-pressure liquefied gas outlet 180 and at least one gaseous gas fuel injector 220. The heat exchanger unit 200 is provided with a liquefied gas inlet 201 and a gaseous gas outlet 202, the liquefied gas inlet being connected to the high-pressure outlet of the liquefied gas high-pressure pump unit 160 by means of a fuel feed line 320, more particularly the second fuel feed line 340 outside the enclosure 102.

The assembly comprises an enclosure 102, which encloses the liquefied gas supply manifold section 120, the liquefied gas return manifold section 140 and the liquefied gas high-pressure pump unit 160. The components containing liquefied or gaseous gas outside the enclosure 102 are provided with a separate double wall 110 which forms an intermediate space inside the double wall 110 bordering the inner space containing gas. For example, pipes are provided with another pipe outside the inner pipe leaving an intermediate space therebetween. A portion of the fuel feed line 320 is inside the enclosure, which may be called as the first fuel feed line 321. A portion of the fuel feed line 320 is outside the enclosure 102, which may be called as the second fuel feed line 340. The first fuel feed line 321 is made of single wall pipe while the second fuel feed line 340 is made of double wall pipe. The assembly comprises a lead-through block 103 in a wall of the enclosure. The lead-through block 103 is provided with conduit 320' to which the first fuel feed line 321 inside the enclosure 102, and the second fuel feed line 340 outside the enclosure 102 are connected with each other. The lead-through block 103 separates the intermediate space of the fuel feed line 320 from the space of the enclosure 102. The lead-through block 103 also seals the connection of the internal space of the enclosure from the surroundings. A leak from a high-pressure line 320 between the pump and the injector 220 is the most likely point for the leakage because the pressure is considerably high, for example 15 MPa, at that portion of the fuel feed line. In case of a failure of the first fuel feed line 321 the leak flows into the enclosure 102. Outside the enclosure, in case of a failure of the second fuel feed line 340, the leak flows into an intermediate space of the line, which is separated by the lead-through block 103 from the inner space of the enclosure 102. The volume of the portion of the first fuel feed line 321 inside the enclosure is so small, that the large volume of the enclosure 102, together with the ventilation of it will take care of the leak easily. When a leak is observed, then the corresponding pump can be immediately shut down, and the leaked amount will remain relatively small compared with the ventilated volume of the enclosure 102.

The components containing liquefied gas within the enclosure are provided with a single wall bordering the inner space containing liquefied gas. Possible leak of gas of the components containing liquefied or gaseous gas outside the enclosure 102 is detected and handled suitably. Any gas leaked from the second fuel feed line 340 to the intermediate space between inner and outer pipes maybe led by separate piping (not shown) to further processing. Thus, the liquefied gas supply manifold section 120 is a single wall manifold and respectively the liquefied gas return manifold section 140 is a single wall manifold. It should be noted that the fuel gas is in liquid phase until it is evaporated in the heat exchanger unit 200.

The assembly can be utilized as a gaseous fuel injection module for one cylinder of the engine and when applied to a multi-cylinder engine, the engine is provided with the assembly for each one of its cylinder, wherein the liquefied gas supply manifold sections 120 of the assembly are connected with each other and the liquefied gas return manifold sections 140 of the assembly are, respectively, connected with each other to form manifolds extending parallel to each other from a first cylinder to a last cylinder in a line of cylinders in the engine.

In order to facilitate ventilation and removal of possibly leaked gaseous fuel away from the enclosure 102 of the assembly 50, it is provided an air inlet 240 and an air outlet 260 connected to a blower 280 arranged in connection with the assembly 50. The blower 280 may be comprised of one or several blowers connected suitably to obtained desired flow rate and under-pre sure in the enclosure 102. It should be noted that only one air outlet is needed even if several assemblies are provided for serving fuel injection to several cylinders of an engine.

Figure 2 discloses schematically an assembly 5 for direct injection of gaseous fuel into a cylinder 100 of a two-stroke internal combustion piston engine which has been further developed from the assembly shown in the figure 1. In the figure 1 the gas feed line 320, particularly the part of the second feed line 340 containing gaseous fuel, has adequate volume to act as a fuel accumulator. Even if not shown here the exchanger unit 200 is also in connection with a suitable heat source. The assembly is configured to pressurize and evaporate liquefied gas fuel and attend to injecting gaseous fuel directly to one combustion chamber. The assembly 50 shown in the figure 2 is otherwise similar to that shown in the figure 1 but here the assembly comprises a separate gaseous gas accumulator 300 connected to the gaseous gas outlet of the heat exchanger unit by means of the fuel feed line 320.

Figure 3 describes the assembly for direct injection of gaseous fuel in a cylinder of a two-stroke, multi-cylinder internal combustion piston engine 1. The large two-stroke crosshead engine, which is depicted in the figure 3, comprises more than one, usually more than six cylinders 100 in a line. The large 2-stroke engine, to which the gaseous fuel feeding system according to the invention is specifically intended, is a low speed, crosshead engine, having a cylinder bore diameter from about 50 cm up to 1m and stroke length of about 2,5 to 3,0 meters.

Each one of the cylinders 100 is provided with the assembly according to figure 2. In the embodiment of the figure 3 the assembly comprises for each cylinder at least two fuel injectors 220, which both are connected to a shared, or a common accumulator 300. Depending on e.g. power and the bore diameter of the engine it may be more advantageous to provide each cylinder with three injectors connected to the common accumulator 300. When applied to a multi-cylinder two-stroke engine the enclosure 102 has a length L which substantially corresponds to the length of a line of the cylinders 100 of the engine. In other words, the enclosure extends from a first cylinder in the line of cylinders to the last cylinder in the line of cylinders of the engine 1.

The enclosure 102 is provided with an air inlet 240 and an outlet 280 at opposite ends of the enclosure 102. The enclosure can be formed of several distinct section connected to one another. The air outlet 260 is connected to a blower 280. It should be noted that only one air outlet is needed but instead of one air outlet the enclosure may be provided with two, or even more outlets, even if several assemblies according to figure 2 are provided for serving fuel injection to several cylinders of an engine.

The enclosure 102 encloses the liquefied gas supply manifold 120' and the liquefied gas return manifold 140' totally and the liquefied gas high-pressure pump units 160, as well. This way the components containing liquefied gas within the enclosure are provided with a single wall bordering the inner space containing liquefied gas and the common enclosure. Thus, the liquefied gas supply manifold 120' and respectively the liquefied gas return manifold 140' can be called as single wall manifolds. The components containing liquefied or gaseous gas outside the enclosure 102 in turn, are provided with a double wall bordering the gaseous fuel feed line 320 which contains and delivers gas to the injectors 220.

The invention can be illustrated by such that the engine comprises one fuel delivery line for each one of the cylinders 100 of the engine. Thus the assembly comprises several fuel delivery lines for the cylinders of the engine, each fuel delivery line comprising one liquefied gas high-pressure pump unit 160 connected to the liquefied gas supply manifold 120' and to the liquefied gas return manifold 140', one heat exchanger unit 200 configured to evaporate the liquefied gas and heating the gaseous gas, and one gaseous gas accumulator 240 to which the number of fuel injectors 220 are connected for receiving gaseous fuel.

The liquefied gas supply manifold 120' is an assembly of multiple gas supply manifold sections 120, comprising one supply manifold section for each cylinder 100 of the engine, as is depicted in the figure 2. Respectively, the liquefied gas return manifold 140' is an assembly of multiple gas return manifold sections 140, comprising one return manifold section for each cylinder of the engine. There is the liquefied gas supply pipe 130 and the liquefied gas return pipe 150 serving for all of the cylinders of the engine.

The liquefied gas supply manifold 120' and the liquefied gas return manifold 140', as well as each one of the liquefied gas high-pressure pumps 160 units are arranged within the common enclosure 102 and the heat exchanger units 200, and the gaseous gas accumulators 240 are arranged outside the enclosure 102. The accumulator for each cylinder can be installed near the injectors, on top of the respective cylinder head. The enclosure 102 is provided for safety reasons. Should there be a leak in the fuel system within the enclosure, the leaked gas can be led away for further processing by means of the blower 280. A leak from a high-pressure line between the pump and the injector 220 is the most likely point for the leakage. The volume in one single-wall high-pressure line is so small, that the large volume of the enclosure 102 and ventilation of it will take care of the leak easily. When a leak is observed, corresponding pump can be immediately shut down quickly, and the leaked amount of gas will remain relatively small compared to the ventilated volume of the enclosure 102.

As is illustrated in the figure 3 the assembly, comprising enclosure 102, the liquefied gas supply manifold 120', the liquefied gas return manifold 140' and the liquefied high-pressure pump units 160 are arranged on top of engine. The assembly is supported by means of suitable support structure, which is attached to the engine. Advantageously the assembly is arranged above the cylinder heads of the engine.

## Claims

1. A fuel injection module (50) for direct injection of gaseous fuel for one cylinder (100) of a multi-cylinder two-stroke internal combustion piston engine (1), the module (50) comprising:
an enclosure (102), enclosing within the enclosure (102)
- a liquefied gas supply manifold section (120,120'),
- a liquefied gas return manifold section (140,140'), arranged parallel with each other within the enclosure (102), and
- a liquefied gas high-pressure pump unit (160) connected to the liquefied gas supply manifold (120, 120') and to the liquefied gas return manifold (140, 140'), and a high-pressure liquefied gas outlet (180) in the liquefied gas high-pressure pump unit (160), and
the module (50) further comprising outside the enclosure:
- a heat exchanger unit (200) configured to evaporate the liquefied gas and heating the gaseous gas and being provided with a liquefied gas inlet (201) and a gaseous gas outlet (202), the liquefied gas inlet (201) being connected to the high-pressure outlet (180) of the liquefied gas high-pressure pump unit (160) by means of a fuel feed line (320), and
- at least one gaseous gas fuel injector (220) connected to the heat exchanger unit,
wherein the fuel feed line (320) outside the enclosure (102) is provided with a separate double wall (110) which forms an intermediate space inside the double wall (110) and the enclosure (102) is provided with a lead-through block (103) via which lead-through block (103) a portion of the fuel feed line (320) outside the enclosure (102) and a portion of the fuel feed line (320) is inside the enclosure are connected with each other, and which lead-through block (103) separates the intermediate space of the fuel feed line (320) from the space of the enclosure (102).

2. A fuel injection module (50) according to claim 1, **characterized in that** the liquefied gas supply manifold (120,120') in the enclosure (102) is a single wall manifold and the liquefied gas return manifold (140,140') in the enclosure (102) is a single wall manifold.

3. A fuel injection module (50) according to anyone of the preceding claims, **characterized in that** the module (50) comprises a gaseous gas accumulator (300) connected to the gaseous gas outlet (202) of the heat exchanger unit (200) by means of the fuel feed line (320).

4. A fuel injection module (50) according to anyone of the preceding claims, **characterized in that** the liquefied gas supply manifold (120') is an assembly of multiple gas supply manifold sections (120), comprising one supply manifold section (120') for each cylinder (100) of the engine.

5. A fuel injection module (50) according to anyone of the preceding claims, **characterized in that** the liquefied gas return manifold (140') is an assembly of multiple gas return manifold sections (140), comprising one return manifold section (140) for each cylinder (100) of the engine.

6. An assembly for direct injection of gaseous fuel into a cylinder of a two-stroke, multi-cylinder internal combustion piston engine (1) wherein each one of the cylinders is provided with a fuel injection module (50) according to anyone of the preceding claims 1 to 3, wherein the assembly comprises number of modules (50) corresponding to number of cylinders of the multi-cylinder internal combustion piston engine (1), connected to each other such that the liquefied gas supply manifold (120'), a liquefied gas return manifold (140') and a common enclosure (102) extend from the first cylinder in the line of cylinders to the last cylinder in the line of cylinders.

7. An assembly according to claim 6, **characterized in that** the enclosure (102) is provided with an air inlet (240) and an outlet (260) at opposite ends of the enclosure.

8. A two-stroke internal combustion piston engine (1) comprising more than one cylinders in which each cylinder is provided with a fuel injection module (50) according to anyone of the preceding claims 1 - 5.

9. A two-stroke internal combustion piston engine (1) according to claim 8, **characterized in that** the enclosure has a length extending from a first cylinder (100) in the line of cylinders to the last cylinder (100) in the line of cylinders of the engine.

10. A two-stroke internal combustion piston engine (1) according to claim 8, **characterized in that** the enclosure (102), the liquefied gas supply manifold (120), the liquefied gas return manifold (140) and the liquefied high-pressure pump units (160) are arranged on and attached to the top of engine.

11. A two-stroke internal combustion piston engine (1) according to claim 9 and 10, **characterized in that** the engine comprises one fuel delivery line for each cylinder (100) of the engine.

## Patentansprüche

1. Kraftstoffeinspritzmodul (50) zur direkten Einspritzung gasförmigen Kraftstoffs für einen Zylinder (100) eines Mehrzylinder-Zweitakt-Kolbenverbrennungsmotors (1), wobei das Modul (50) aufweist:
ein Gehäuse (102), das Gehäuse (102) umschließend:
- einen Flüssiggasversorgungsverteilerabschnitt (120, 120')
- einen Flüssiggasrücklaufverteilerabschnitt (140, 140'), wobei die beiden Verteilerabschnitte parallel zueinander im Inneren des Gehäuses (102) angeordnet sind, und
- eine Flüssiggashochdruckpumpeneinheit (160), welche mit dem Flüssiggasversorgungsverteilerabschnitt (120, 120') und dem Flüssiggasrücklaufverteilerabschnitt (140, 140') verbunden ist, und einen Flüssiggashochdruckauslass (180) in der Flüssiggashochdruckpumpeneinheit (160), und
wobei das Modul (50) außerhalb des Gehäuses ferner aufweist:
- eine Wärmetauschereinheit (200), welche dafür eingerichtet ist, das Flüssiggas zu verdampfen und das gasförmige Gas zu erhitzen, und mit einem Flüssiggaseinlass (201) und einem Auslass für gasförmiges Gas (202) versehen ist, wobei der Flüssiggaseinlass (201) mittels einer Kraftstoffzuleitung (320) mit dem Hochdruckauslass (180) der Flüssiggashochdruckpumpeneinheit (160) verbunden ist, und
- mindestens eine Einspritzdüse (220) für gasförmiges Gas, welche mit der Wärmetauschereinheit verbunden ist,
wobei die Kraftstoffzuleitung (320) außerhalb des Gehäuses (102) eine separate Doppelwand (110) aufweist, welche einen Zwischenraum innerhalb der Doppelwand (110) bildet, und das Gehäuse (102) einen Durchführungsblock (103) aufweist, wobei über den Durchführungsblock (103) ein Abschnitt der Kraftstoffzuleitung (320) außerhalb des Gehäuses (102) und ein Abschnitt der Kraftstoffzuleitung (320) innerhalb des Gehäuses miteinander verbunden sind, und
wobei der Durchführungsblock (103) den Zwischenraum der Kraftstoffzuleitung (320) vom Innenraum des Gehäuses (102) trennt.

2. Kraftstoffeinspritzmodul (50) nach Anspruch 1, **dadurch gekennzeichnet, dass** der Flüssiggasversorgungsverteiler (120, 120') im Gehäuse (102) ein einwandiger Verteiler ist und der Flüssiggasrücklaufverteiler (140, 140') im Gehäuse (102) ein einwandiger Verteiler ist.

3. Kraftstoffeinspritzmodul (50) im Einklang mit einem der vorstehenden Ansprüche, **dadurch gekennzeichnet, dass** das Modul (50) einen Gasspeicher (300) aufweist, welcher mittels der Kraftstoffzuleitung (320) mit dem Auslass für gasförmiges Gas (202) der Wärmetauschereinheit (200) verbunden ist.

4. Kraftstoffeinspritzmodul (50) nach einem der vorstehenden Ansprüche, **dadurch gekennzeichnet, dass** der Flüssiggasversorgungsverteiler (120') eine Baugruppe aus mehreren Gasversorgungsverteilerabschnitten (120) ist, welche einen Versorgungsverteilerabschnitt (120') für jeden Zylinder (100) des Motors aufweist.

5. Kraftstoffeinspritzmodul (50) nach einem der vorstehenden Ansprüche, **dadurch gekennzeichnet, dass** der Flüssiggasrücklaufverteiler (140') eine Baugruppe aus mehreren Gasrücklaufverteilerabschnitten (140) ist, welche einen Rücklaufverteilerabschnitt (140) für jeden Zylinder (100) des Motors aufweist.

6. Baugruppe zur direkten Einspritzung gasförmigen Kraftstoffs in einen Zylinder eines Zweitakt-Mehrzylinder-Kolbenverbrennungsmotors (1), wobei jeder der Zylinder ein Kraftstoffeinspritzmodul (50) im Einklang mit einem der vorstehenden Ansprüche 1 bis 3 aufweist, wobei die Baugruppe eine Anzahl von Modulen (50) entsprechend der Anzahl von Zylindern des Mehrzylinder-Kolbenverbrennungsmotors (1) aufweist, welche derart miteinander verbunden sind, dass sich der Flüssiggasversorgungsverteiler (120'), ein Flüssiggasrücklaufverteiler (140') und ein gemeinsames Gehäuse (102) vom ersten Zylinder in der Reihe von Zylindern bis zum letzten Zylinder in der Reihe von Zylindern erstrecken.

7. Baugruppe nach Anspruch 6, **dadurch gekennzeichnet, dass** das Gehäuse (102) einen Lufteinlass (240) und einen Auslass (260), welche an entgegengesetzten Seiten des Gehäuses angeordnet sind, aufweist.

8. Zweitakt-Kolbenverbrennungsmotor (1) aufweisend mehr als einen Zylinder, wobei jeder der Zylinder ein Kraftstoffeinspritzmodul (50) im Einklang mit einem der vorstehenden Ansprüche 1 bis 5 aufweist.

9. Zweitakt-Kolbenverbrennungsmotor (1) nach Anspruch 8, **dadurch gekennzeichnet, dass** das Gehäuse eine Länge aufweist, welche sich von einem ersten Zylinder (100) in der Reihe von Zylindern bis zum letzten Zylinder (100) in der Reihe von Zylindern des Motors erstreckt.

10. Zweitakt-Kolbenverbrennungsmotor (1) nach Anspruch 8, **dadurch gekennzeichnet, dass** das Gehäuse (102), der Flüssiggasversorgungsverteiler (120), der Flüssiggasrücklaufverteiler (140) und die Flüssiggashochdruckpumpeneinheiten (160) am Motor angeordnet und auf dessen Oberseite angebracht sind.

11. Zweitakt-Kolbenverbrennungsmotor (1) nach Anspruch 9 und 10, **dadurch gekennzeichnet, dass** der Motor eine Kraftstoffzuführleitung für jeden Zylinder (100) des Motors aufweist.

## Revendications

1. Module d'injection de carburant (50) destiné à l'injection directe de carburant gazeux pour un cylindre (100) d'un moteur à piston à combustion interne à deux temps à plusieurs cylindres (1), le module (50) comprenant :
une enceinte (102), renfermant à l'intérieur de l'enceinte (102)
- une section de collecteur d'alimentation en gaz liquéfié (120, 120'),
- une section de collecteur de retour des gaz liquéfiés (140,140'), disposées parallèlement l'une à l'autre à l'intérieur de l'enceinte (102), et
- une unité de pompe à haute pression de gaz liquéfié (160) reliée au collecteur d'alimentation en gaz liquéfié (120, 120') et au collecteur de retour de gaz liquéfié (140, 140'), et une sortie de gaz liquéfié à haute pression (180) dans l'unité de pompe à haute pression de gaz liquéfié (160), et
le module (50) comprenant en outre à l'extérieur de l'enceinte :
- un échangeur de chaleur (200) configuré pour faire évaporer le gaz liquéfié et chauffer le gaz gazeux et pourvu d'une entrée de gaz liquéfié (201) et d'une sortie de gaz gazeux (202), l'entrée de gaz liquéfié (201) étant reliée à la sortie à haute pression (180) de l'unité de pompage à haute pression de gaz liquéfié (160) par l'intermédiaire d'une conduite d'alimentation en carburant (320), et
- au moins un injecteur de gaz gazeux (220) relié à l'unité d'échangeur de chaleur,
la conduite d'alimentation en carburant (320) à l'extérieur de l'enceinte (102) étant pourvue d'une double paroi séparée (110) qui forme un espace intermédiaire à l'intérieur de la double paroi (110) et l'enceinte (102) étant pourvue d'un bloc de traversée (103) via lequel bloc de traversée (103) une partie de la conduite d'alimentation en carburant (320) à l'extérieur de l'enceinte (102) et une partie de la conduite d'alimentation en carburant (320) se trouvant à l'intérieur de l'enceinte sont reliées l'une à l'autre, et ledit bloc de traversée (103) séparant l'espace intermédiaire de la conduite d'alimentation en carburant (320) de l'espace de l'enceinte (102).

2. Module d'injection de carburant (50) selon la revendication 1, **caractérisé en ce que** le collecteur d'alimentation en gaz liquéfié (120, 120') dans l'enceinte (102) est un collecteur à paroi unique et le collecteur de retour de gaz liquéfié (140, 140') dans l'enceinte (102) est un collecteur à paroi unique.

3. Module d'injection de carburant (50) selon l'une quelconque des revendications précédentes, **caractérisé en ce que** le module (50) comprend un accumulateur de gaz gazeux (300) relié à la sortie de gaz gazeux (202) de l'unité d'échangeur de chaleur (200) au moyen de la conduite d'alimentation en carburant (320).

4. Module d'injection de carburant (50) selon l'une quelconque des revendications précédentes, **caractérisé en ce que** le collecteur d'alimentation en gaz liquéfié (120') est un assemblage de multiples sections de collecteur d'alimentation en gaz (120), comprenant une section de collecteur d'alimentation (120') pour chaque cylindre (100) du moteur.

5. Module d'injection de carburant (50) selon l'une quelconque des revendications précédentes, **caractérisé en ce que** le collecteur de retour de gaz liquéfié (140') est un assemblage de multiples sections de collecteur de retour de gaz (140), comprenant une section de collecteur de retour (140) pour chaque cylindre (100) du moteur.

6. Ensemble pour l'injection directe de carburant gazeux dans un cylindre d'un moteur à piston à combustion interne multicylindre à deux temps (1), dans lequel chacun des cylindres est muni d'un module d'injection de carburant (50) selon l'une quelconque des revendications 1 à 3, l'ensemble comprenant un nombre de modules (50) correspondant au nombre de cylindres du moteur à piston à combustion interne multicylindre (1), reliés les uns aux autres de telle sorte que le collecteur d'alimentation en gaz liquéfié (120'), un collecteur de retour de gaz liquéfié (140') et une enceinte commune (102) s'étendent du premier cylindre de la ligne de cylindres au dernier cylindre de la ligne de cylindres.

7. Ensemble selon la revendication 6, **caractérisé en ce que** l'enceinte (102) est munie d'une entrée d'air (240) et d'une sortie (260) aux extrémités opposées de l'enceinte.

8. Moteur à piston à combustion interne à deux temps (1) comprenant plus d'un cylindre, chaque cylindre étant pourvu d'un module d'injection de carburant (50) selon l'une quelconque des revendications précédentes 1 à 5.

9. Moteur à piston à combustion interne à deux temps (1) selon la revendication 8, **caractérisé en ce que** l'enceinte a une longueur s'étendant d'un premier cylindre (100) dans la ligne de cylindres au dernier cylindre (100) dans la ligne de cylindres du moteur.

10. Moteur à piston à combustion interne à deux temps (1) selon la revendication 8, **caractérisé en ce que** l'enceinte (102), le collecteur d'alimentation en gaz liquéfié (120), le collecteur de retour de gaz liquéfié (140) et les unités de pompe à haute pression de gaz liquéfié (160) sont disposés sur le sommet du moteur et fixés à celui-ci.

11. Moteur à piston à combustion interne à deux temps (1) selon les revendications 9 et 10, **caractérisé en ce que** le moteur comprend une conduite de délivrance de carburant pour chaque cylindre (100) du moteur.
